# EUROPEAN PATENT APPLICATION

(11) **EP 2 724 951 A1**
(43) Date of publication of application: **30.04.2014**
(21) Application number: 14151078.4
(22) Date of filing: 12.10.2009
(51) Int. Cl.: B65D 1/02, B65D 23/10

(54) **Plastics container**

(30) Priority: 14.10.2008 GB 0818830
(62) Divisional of application: 12176562.2
(71) Applicant: Nampak Plastics Europe Limited, Buckinghamshire MK16 9QJ (GB)
(72) Inventor: Glover, Andrew, Chesham, Buckinghamshire HP5 3EE (GB)
(74) Representative: McWilliams, David John

(57) **Abstract**

A plastics container (110) for storing a liquid (e.g. milk), the container having a body (120) which includes an integral handle (130) defining a handle eye (132)and which defines a chamber for storing liquid, the body having a footprint (140) with a transverse axis extending in a first direction and a longitudinal axis (BB) extending in a second direction perpendicular to said first direction, wherein the footprint has two generally opposing longitudinal end surfaces (144) and angled side surfaces arranged between said longitudinal end surfaces, and the footprint has a width which varies along its longitudinal axis, is greatest at a middle region of the footprint and smallest at either longitudinal end of the footprint, wherein the width of the footprint in the middle region is less than the length of the footprint between the longitudinal end surfaces, and wherein the integral handle has a longitudinal axis which extends in line with the longitudinal axis of the body.

## Description

The present invention relates to a plastics container, particularly, but not exclusively, to a blow moulded plastics container of the kind commonly used for transporting or storing milk.

It is known to package milk in lightweight plastics containers for retail through supermarkets and the like. There is a desire to make such plastics containers as light as possible, whilst ensuring that they remain fit for purpose in delivering the product in good condition for consumers.

In an attempt to define "fit for purpose", the packaging industry works to an empirical 60N topload force test. If a lightweight plastics container is able to withstand a 60N topload force applied at a rate of 4mm per second over a set distance, experience shows that it will survive the milk filling and distribution system and retail successfully to the consumer.

At present, for each container of the regular capacity sizes of milk container (e.g. 1 pint, 2 pint, 4 pint, 6 pint or 1 litre, 2 litre etc), there is a weight "ceiling" which means that it is difficult to manufacture a lighter container that is still fit for purpose (e.g. suitable to pass the empirical 60N topload force test).

The present invention has been devised with a view to reducing the weight ceiling of standard capacity containers without compromising structural integrity i.e. containers remain fit for purpose.

According to a first aspect of the invention, there is provided a plastics container for storing liquid (e.g. milk), comprising: a body portion defining a chamber for storing liquid; and a neck portion mounted on and extending from the body portion, the neck portion having an open passageway therethrough for passage of liquid to/from the chamber, wherein the neck and body portions intersect in a closed loop which has a non-planar profile.

Historically, the intersection between the neck and body portions of a conventional lightweight blow moulded plastics container is a potential weak point and must be reinforced by locally increasing the thickness of plastics material in this region relative to that in the majority of the body portion. However, the present inventors believe that the weak point arises because the neck and body portions intersect in a closed loop which has a substantially planar profile. The present inventors have surprisingly found that by re-designing the intersection to provide a closed loop with a non-planar profile, the need for material reinforcement may be reduced or even obviated altogether. In this way, the plastics container may be made significantly lighter, perhaps even 10-15% lighter without compromising its structural integrity (e.g. as determined by the empirical 60N topload force test).

In preferred embodiments, the container is of the kind configured to stand on a planar surface, e.g. on a trolley or refrigerator shelf. The container is preferably configured such that the body portion, neck portion and open passageway have a common longitudinal axis, intended to be generally vertical in storage (e.g. with the rim of the open passageway presented generally horizontally). The closed loop is preferably concentric with said common longitudinal axis of the body portion, neck portion and open passageway. Such concentricity is desirable to avoid twisting forces that might otherwise occur during topload force testing.

Having an open passageway which is concentric with the central longitudinal axis of the body portion of the container is also advantageous in reducing foaming effects during the filling of the container with liquid, e.g. milk. Such containers are often referred to as "centre neck" containers and are therefore distinct in construction from containers in which the open passageway of the neck portion is "off centre" or arranged at an angle of inclination away from vertical, e.g. in the case of conventional watering cans or jerry cans.

The closed loop may have a circular or at least substantially circular footprint. Alternatively or additionally, the closed loop may curve in three mutually perpendicular directions. The neck portion may have a substantially cylindrical part with a longitudinal axis, in which case the closed loop preferably curves around the longitudinal axis at a constant radius and may also curve in a direction parallel to such axis. The closed loop may lie on a hyperbolic paraboloid surface (which is often referred to as the saddle surface or the standard saddle surface).

Providing a closed loop having a circular footprint (i.e. of constant radius) is desirable for providing equalisation of forces transferred down into the body portion during topload force testing.

In preferred embodiments, the body portion of the container defines shoulders (typically a curved upper part of the body portion) and the closed loop is located at the transition between the neck portion and the shoulders of the body portion. More particularly, the closed loop is preferably located at the transition between the substantially cylindrical part and the shoulders of the body portion. In that sense, the substantially cylindrical part may define an intermediate formation between the body portion and what is commonly referred to as the 'neck platform' of the container, i.e. the region at the base of the threaded neck in conventional milk containers.

Preferably, the cylindrical part defines a circular footprint and more preferably the side walls of the cylindrical part are parallel with the longitudinal axis. This provides for further concentricity of structure, advantageous during topload force testing.

The neck portion may have a screw thread for engaging a lid with a corresponding screw thread. The neck portion may have a stepped profile, and the width of the neck portion may be greatest where the neck portion intersects with the body portion. The stepped profile may compromise a frusto-conical surface, providing a gradual variation in the width of the neck portion along at least a part of its length.

In preferred embodiments, the neck portion defines a threaded portion for receiving a lid in threaded engagement therewith and the body portion defines a upper shoulder region of curved profile; wherein the neck portion defines a circular cylindrical portion below said threaded portion, having side walls concentric with and parallel to said central longitudinal axis, and the intersection with the shoulder region of the body portion is non-planar. The threaded portion preferably meets the cylindrical portion in a closed loop of planar intersection. Preferably, the cylindrical portion is an intermediate formation between the threaded portion and the body portion.

The container is preferably of blow moulded construction (e.g. formed by blow moulding).

There is also provided a method of making a plastics container comprising the steps of providing a mould configured for producing a container according to the first aspect of the invention; and blow moulding plastics in the mould, i.e. to produce a container according to the first aspect of the invention.

According to a second aspect of the invention, there is provided a plastics container for storing a liquid (e.g. milk), comprising a body with an integral handle defining an aperture with a central axis extending in a first direction through the body, the body having a footprint with a longitudinal axis extending in a second direction which is perpendicular to the first direction, wherein the footprint has a width which varies along its longitudinal axis and is greater in a middle region of the footprint than at either longitudinal end thereof.

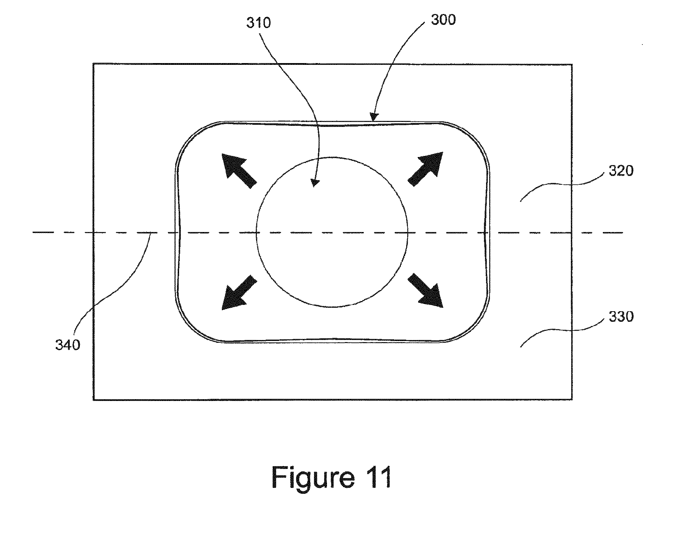

A known plastics container has a substantially rectangular footprint, with two corner regions on each side of a notional centre line aligned with the longitudinal axis, with all four corner regions equidistant thereform. An example is shown in Figure 11. Such a container may be of blow moulded construction, e.g. formed by blow moulding a parison in a mould with two parts which separate along a notional centre line (e.g. along the central longitudinal axis of the container in Figure 11) when ejecting the container from the mould. However, it is often the case that when a parison is blown into a square/rectangular cavity of the kind shown in Figure 11 (in which the mould split occurs on opposing parallel faces of the container), aggressive strectching/thinning of the parison wall thickness occurs.

The present inventors have appreciated that each corner region represents a potential weak point in the body as a whole, and that the conventional way of overcoming this problem (i.e. by ensuring that the wall thickness at the corner regions does not fall below a minimum level) does not assist with trying to reduce the overall weight of the plastics container. Accordingly, the present inventors have proposed a container with a novel footprint in accordance with this second aspect of the invention, with less tendency for localised thinning of the wall thickness in critical areas during the blow moulding process. As a result, the overall weight of the plastics container may be reduced, whilst maintaining structural integrity and storage capacity.

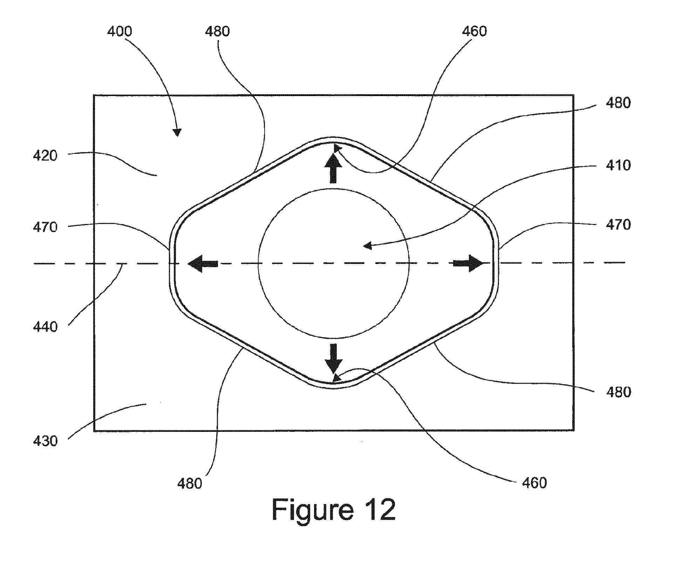

In particular, with the mould tool split line arranged 'corner to corner', as shown by way of example in Figure 12 (wherein the split line is arranged generally 45 degrees to that shown in Figure 11) and providing that the corners arranged at 90 degrees to the split line are not excessively deep, it has been found that the stretching/thinning effect on the parison is likely to be less extreme than with conventional mould tools of the kind shown in Figure 11, resulting in more even distribution of plastic within the wall thickness.

The central longitudinal axis of the footprint is preferably aligned with the split line of the mould tool in which the container is to be blow moulded.

In preferred embodiments, the footprint is non-rectangular (i.e. the footprint does not define internal right angles). The internal angles of the foot print in the middle region are preferably greater than the internal angles at the longitudinal ends of the footprint.

The integral handle is preferably arranged at a corner of the container, and more preferably has a longitudinal axis which extends in line with the longitudinal axis of the body.

The body may define a chamber for storing liquid, with the chamber extending into and/or through the integral handle. The footprint may be at least partially diamond-shaped (i.e. generally defining a rhombus), and the at least partially diamond-shaped footprint may be truncated at either longitudinal end thereof. Any corner region may be rounded, rather than sharp, without departing from the diamond-shaped footprint. The footprint may thus be substantially six-sided, with one pair of parallel sides at opposed longitudinal ends of the footprint. The parallel sides are preferably shorter than the other four sides (which are preferably of equal length). This six-sided configuration is distinct from a four-sided or square footprint known in the art, as well as known quasi-octagonal footprints defined by a generally square body having curved or truncated corner regions which themselves define diametrically opposing sides/surfaces. The novel six-sided footprint allows for close packing of multiple identical containers, with little or no wasted space therebetween.

The width of the footprint may be greatest at the middle region, which may be at least 25%, possibly even at least 50%, greater in the middle region that at wither longitudinal end of its maximum length. Further, the width of the footprint in the middle region may be less than 10 times, possibly less than about 5 times, the width at either end of the maximum length.

The footprint may include a peripheral step, for example created by a groove in the body. The groove may extend in a direction perpendicular to the central and longitudinal axes and may be formed between the middle region and one longitudinal end of the footprint. The step may be adjacent a widest part of the footprint. Such a step may be useful for aligning a container in a predetermined orientation relative to an external datum, for example when multiple containers of the same kind and configuration are conveyed in series along a production line.

It should be understood that containers of the first aspect may include one or more features of the containers of the second aspect and vice versa. For example, the container of the first aspect may include an integral handle and may define a diamond-shaped footprint, preferably with the handle arranged at a corner of the body portion, more preferably in line with the longitudinal axis of the body and along a tool split line running corner to corner. By way of further example, a container of the second aspect may include may include the non-planar neck intersection of the first aspect.

Additionally or alternatively, a container of the second aspect preferably includes a centre neck open passageway, to reduce foaming effects during the filling of the container with liquid, e.g. milk.

According to another aspect of the invention, there is provided a container for storing and dispensing liquids (e.g. milk), preferably of blow moulded construction, comprising a body portion defining a chamber for storing liquid; and a neck portion mounted on and extending from the body portion, the neck portion having an open passageway therethrough for passage of liquid to/from the chamber; wherein the container is configured to stand on a planar surface for liquid storage purposes; wherein the body portion defines a central longitudinal axis and said neck portion and open passageway are coaxial therewith; wherein the neck portion defines a threaded portion for receiving a lid in threaded engagement therewith and the body portion defines a upper shoulder region of curved profile; wherein the neck portion defines a circular cylindrical portion below said threaded portion and having side walls concentric with and parallel to said central longitudinal axis, wherein the lower end of the cylindrical portion defines a non-planar intersection with the shoulder region of the body portion.

The threaded portion preferably meets the cylindrical portion in a closed loop of planar intersection. Preferably, the cylindrical portion is an intermediate formation between the threaded portion and the body portion. The container preferably includes an integral handle and may define a diamond-shaped footprint, preferably with the handle arranged at a corner of the body portion, more preferably with the handle eye extending along a tool split line running corner to corner.

The container may include one or more features from the first and second aspects of the invention set forth above.

Other aspects and features of the invention will be apparent from the claims and the following description of preferred embodiments, made by way of example with reference to the accompanying drawings, in which:
Figure 1 shows a perspective view of part of a plastics container embodying one aspect of the invention;
Figure 2 shows a side view of the plastics container of Figure 1;
Figure 3 shows a front view of the plastics container of Figure 1;
Figure 4 illustrates a standard saddle surface;
Figure 5 is a schematic cross section through a three-piece mould tool for blow moulding the container of Figures 1 to 3;
Figures 6a-6c illustrate a first plastics container embodying a second aspect of the invention;
Figure 7 illustrates the first plastics container of Figures 6a-6c being conveyed in series;
Figure 8 illustrates the first plastics container of Figures 6a-6c stored with other such containers on a trolley;
Figures 9a and 9b illustrate a second plastics container embodying the second aspect of the invention;
Figure 10 illustrates the second plastics container of Figures 9a and 9b stored with other such containers on a trolley;
Figure 11 is a schematic diagram showing a cross-section through a mould tool for blow moulding a plastics container of substantially rectangular footprint; and
Figure 12 is a schematic diagram of a preferred mould tool for producing a blow moulded container of non-rectangular footprint.

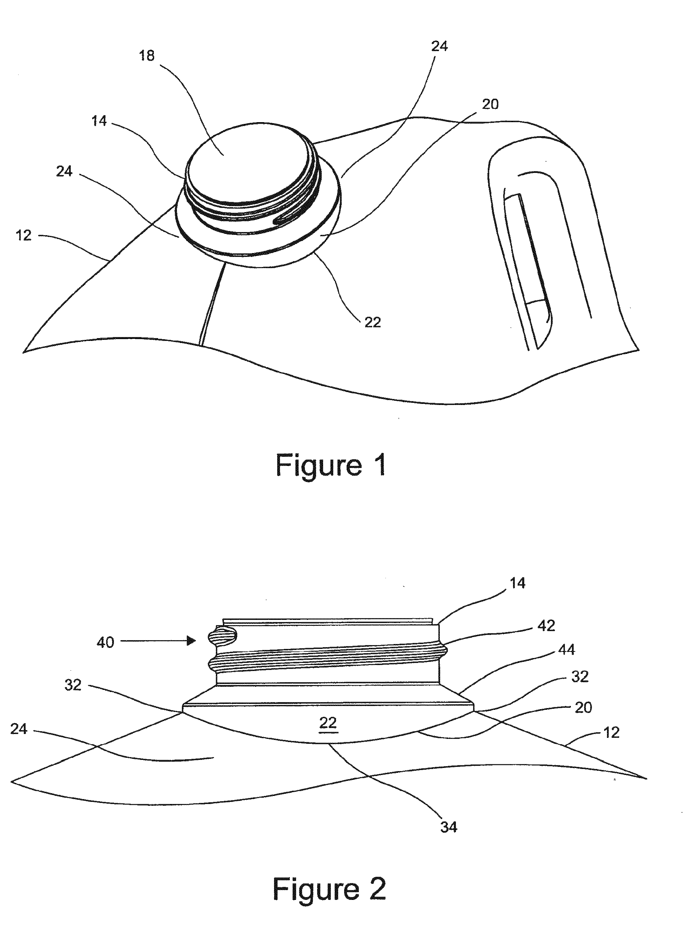

Figure 1 shows a lightweight blow moulded plastics container 10 embodying one aspect of the invention. The container 10 comprises a body portion 12 and a neck portion 14. The body portion 12 defines a chamber 16 for storing liquid (e.g. milk). The neck portion 14 is mounted on and extends from the body portion 12 and has an open passageway 18 therethrough which communicates with the chamber 16 and through which the container 10 is filled with, and emptied of, liquid. As is normal in the art, the passageway 18 may by covered with a hermetic seal.

The neck portion 14 intersects the body portion 12 in a closed loop 20 with a non-planar profile. The closed loop 20 is located at the transition between the substantially cylindrical wall 22 at the base of the neck portion 14 and the upper part or shoulders 24 of the body portion 12.

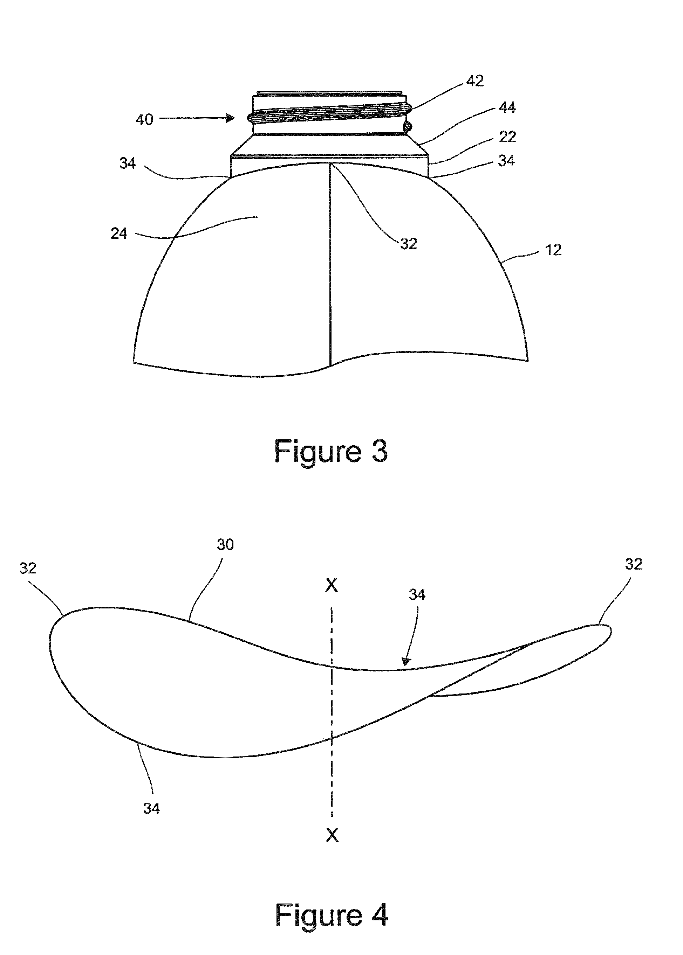

The non-planar profile of the closed loop 20 is best illustrated with reference to Figure 4 which shows a standard saddle surface 30. The closed loop 20 lies on such a surface at a fixed distance from the central axis XX. The closed loop 20 has a pair of maxima 32 and a pair of minima 34, and these are seen in Figure 2 and 3 disposed equidistantly around the circumference of the cylindrical wall 22.

In the illustrated embodiment, the closed loop 20 has a substantially circular footprint, being bound by cylindrical wall 22.

The neck portion 14 may have a substantially cylindrical upper part 40 with a screw thread 42 for engaging a lid (not shown) with a corresponding screw thread. The cylindrical upper part 40 and cylindrical wall 22 at the base of the neck portion 14 are separated by a frusto-conical section 44, arranged such that the neck portion is wider at its base than at its free end. The cylindrical upper part 40, cylindrical wall 22 and frusto-conical section 44 are all centred on a common longitudinal axis. The height of the cylindrical wall 22 (in a direction parallel to the common longitudinal axis) varies in a circumferential direction around the periphery of the neck portion 14, dependent upon curvature of the closed loop 20 in a direction parallel to the common longitudinal axis. The lower end of the cylindrical wall 22 defines the non-planar intersection with the shoulder region of the body portion 12.

It should be noted that the container 10 is of the kind configured to stand on a planar surface, e.g. on a trolley or refrigerator shelf. More particularly, the body portion 12, neck portion 14 and open passageway 18 have a common (central) longitudinal axis, intended to be generally vertical during storage of the container (i.e. with the rim of the open passageway 18 presented generally horizontally). The closed loop 20 is coaxial with said common longitudinal axis of the body portion 12, neck portion 14 and open passageway 18. The concentricity of the body portion 12, neck portion 14, open passageway 18 and closed loop 20 is desirable to avoid twisting forces that might otherwise occur during topload force testing.

The container may also be referred to as a "centre neck" container, by virtue of the open passageway being concentric with the central longitudinal axis of the body portion of the container. Such a configuration is particularly advantageous in reducing foaming effects during the filling of the container with liquid, e.g. milk.

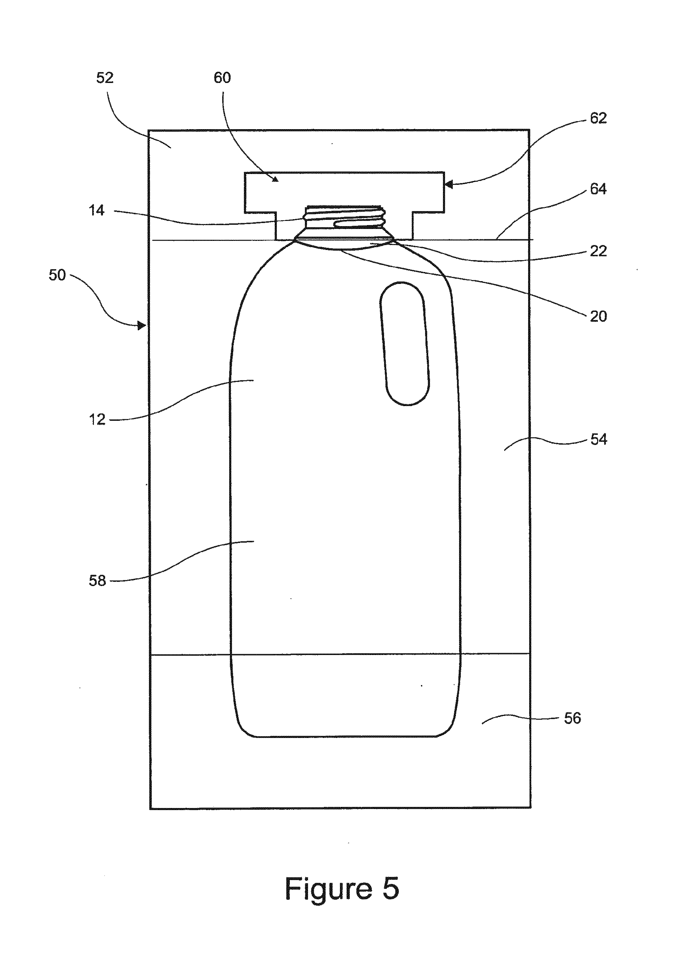

The container 10 is manufactured by blow moulding using an appropriately shaped mould tool. An example of a suitable tool is shown in Figure 5, wherein the tool 50 includes a neck block 52, body block 54 and base block 56. The body block 54 and base block 56 define a continuous cavity 58 in which the body portion 12 of the container 10 is formed. The neck block 52 defines a cavity 60 in which the threaded neck portion 14 of the container 10 is formed.

As is common in the art, the neck block 52 is provided with a neck insert 62 configured to define the desired shape and thread formation of the neck portion 14. Neck inserts of different internal configuration are interchangeable within the neck block 52. Similarly, the neck block 52 may be interchangeable with different body blocks 54.

It will be understood that the body portion 12 and neck portion 14 are distinct parts of the container 10, which are conventionally defined by distinct pieces of the mould tool 50, i.e. the body block 54 and neck block 52, respectively, separated by a split line 64 of the tool 50 (at the transition between the neck block 52 and the body block 54). However, in preferred embodiments of the invention, the closed loop 20 is below the split line. More particularly, the cylindrical part 22 of the neck portion 14 is formed below the split line 64, within the body block 54. Hence, the closed loop 20 is located adjacent, yet below, what is commonly referred to as the 'neck platform' of the container (known conventionally as the part of the neck portion which meets the shoulders of the body portion). However, in this case, the cylindrical part is effectively an intermediate formation between the neck platform and the shoulders of the body portion. In each case, it will be preferred if the closed loop and associated intermediate formation is formed in the body block 54, so that different threaded portions can be blow moulded therewith using different neck blocks 52.

The result is a strengthened container, which overcomes the conventional requirement for increased wall thickness between the neck and body portions in order to overcome structural weakness.

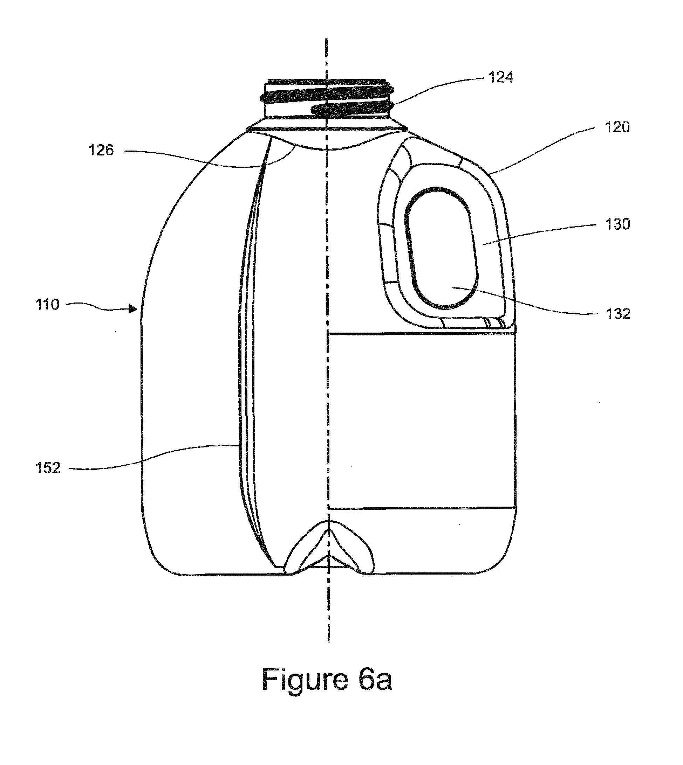

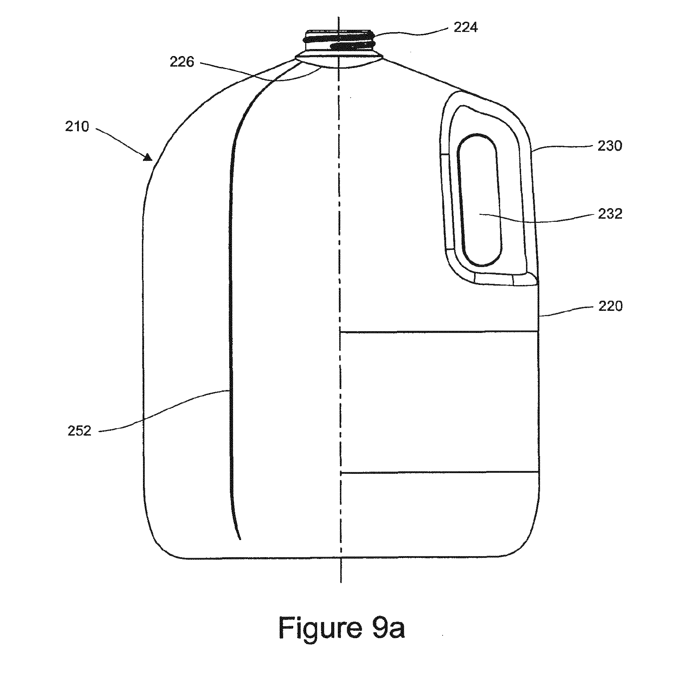

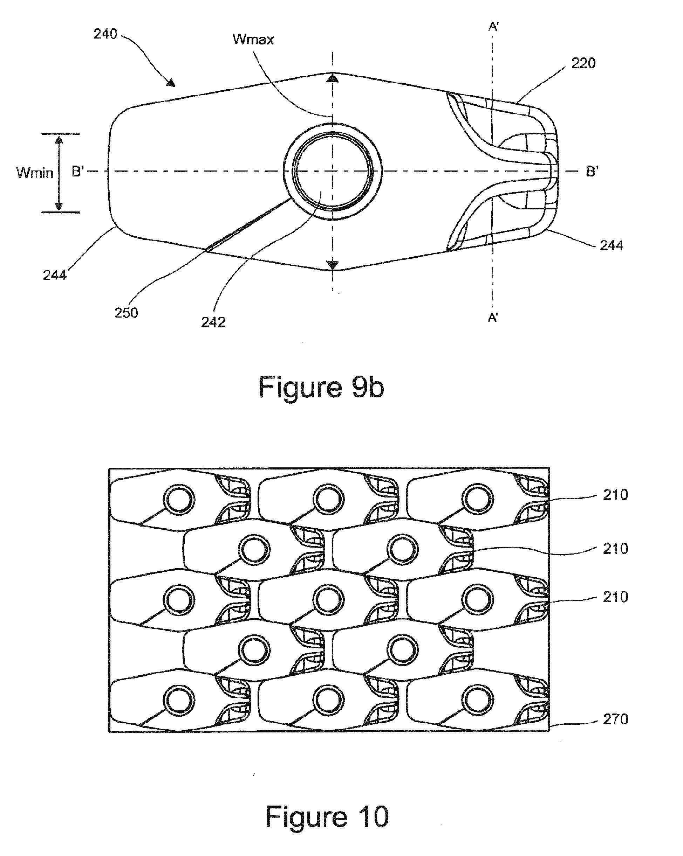

Figures 6a-6c illustrate respectively perspective, plan and front views of a first plastics container 110 embodying a second aspect of the invention, and Figures 9a and 9B illustrate respectively plan and front views of a second plastics container 210 embodying the second aspect of the invention. The first and second plastics containers 110, 210 have different capacities, with the first container 110 having a 1 pint capacity and the second container 210 having a 6 pint capacity. Otherwise, the first and second containers 110, 210 have many features in common, including a body 120, 220 with a neck portion 124, 224 which intersects the rest of the body in a closed loop 126, 226 with a non-planar profile.

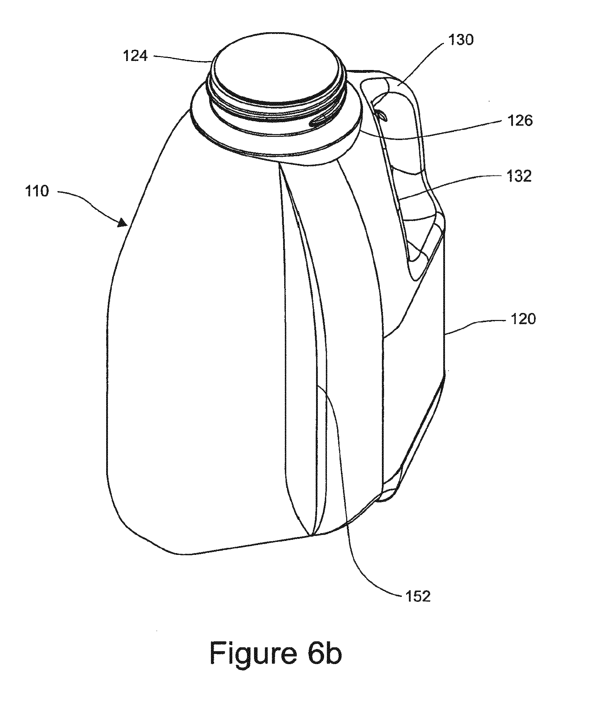

The body 120 of the first container 110 has an integral handle 130 defining an aperture 132 (often referred to as the handle 'eye') with a central axis AA extending in a first direction through the body 120. The central axis AA is parallel to the direction of separation of the two parts 134, 136 of the mould - shown schematically in Figure 6b - in which the first container 110 is formed.

The body 120 projects a footprint 140 which in the present case is taken to be the outermost periphery visible in the plan view. The footprint 140 has a longitudinal axis BB extending in a second direction which is perpendicular to the first direction. The footprint 140 has a width which varies along its longitudinal axis BB, and is greater in a middle region 142 of the footprint 140 than at either longitudinal end 144 thereof. In fact, the maximum width (Wmax) is in the middle region 142 and the minimum width (Wmin) is at either longitudinal end 144. The ratio of Wmax:Wmin is about 5:1. The footprint 140 has a substantially truncated-diamond shape, with the longitudinal ends 144 being present in place of one pair of corners along the longitudinal axis BB. The longitudinal ends 144 represent the opposed parallel sides of the container 110, with central axis AA parallel thereto. The internal angles are non-right angles, i.e. at the middle region the opposing internal angles are greater than 90 degrees. The footprint 140 is generally six-sided and is distinct from four-sided or square footprints known in the art, as well as known quasi-octagonal footprints defined by a generally square bodies having curved or truncated corner regions which themselves define diametrically opposing sides/surfaces.

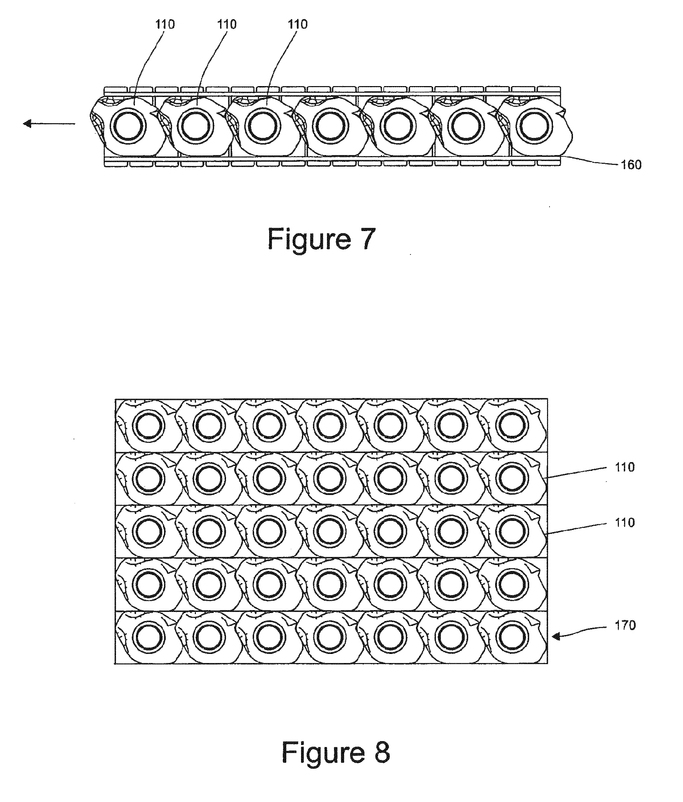

The footprint 140 of the container 110 includes a peripheral step 150, which is formed by a vertical groove or rib 152 in the body 150. The rib 152 helps with aligning multiple containers 110 in a predetermined orientation relative to an external datum, such as a conveyor 160, as shown in Figure 7. In this way the containers 110 may be arranged into a close packed array, for example when filling a standard trolley shelf 170 as shown in Figure 8.

Figures 9a and 9b illustrate the body 220 of the second container 220 having an integral handle 230 defining an aperture 232 with a central axis A'A' extending in a first direction through the body 220. The body 220 has a footprint 240 which is visible in Figure 9a. The footprint 240 has a longitudinal axis B'B' extending in a second direction which is perpendicular to the first direction. The footprint 240 has a width which varies along its length, and is greatest (Wmax) in a middle region 242, and smallest (Wmin) at either longitudinal end 244. The ratio of Wmax:Wmin is about 3:1. The footprint 240 has a substantially truncated-diamond shape; the longitudinal ends 244 replacing two corners along the longitudinal axis B'B' and adding an additional two sides to the otherwise four-sided shape. The footprint 240 includes a slight peripheral step 250 formed by a vertical rib 252 which in the case of container 210 is more for styling than alignment purposes. As shown in Figure 10, multiple containers 210 are arranged in a close packed array, with adjacent rows offset by half a container length to fit the width of a standard trolley shelf 270.

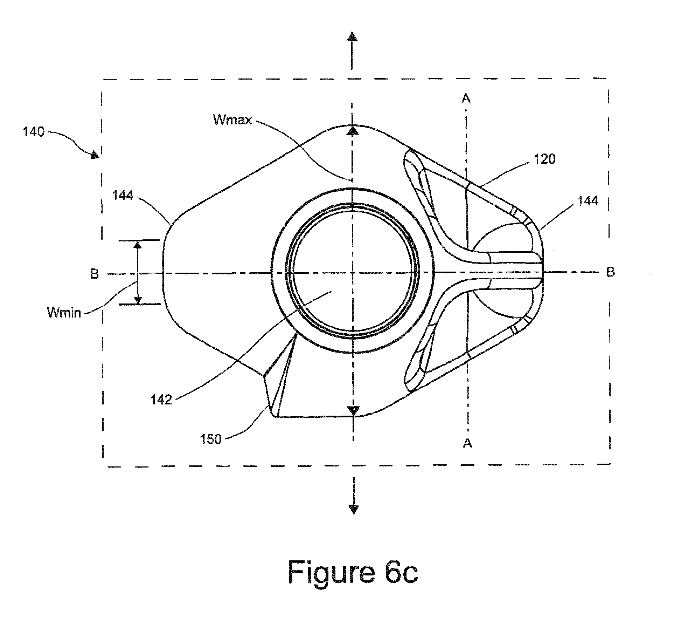

The containers described in respect of Figures 6 to 10 are preferably formed by blow moulding. Preferably, the mould tool is configured such that the longitudinal axis of the handle and longitudinal axis of the body are in line with one another along a centre split line of the tool (such that the handle is arranged at one corner of the body). Put another way, the mould tool is configured so that the mould split line is arranged corner to corner with respect to the body, with the middle region of the body extending in the direction of opening of the tool (perpendicular to the split line).

As with the embodiment of the Figures 1 to 3, the containers 110, 210 include a centre neck open passageway, which is useful in reducing foaming effects during filling of the container with liquid, e.g. milk. The neck and passageway are arranged with the same concentricity considerations (with respect to the central vertical axis of the body) as the embodiments of Figures 1 to 3, to reduce for adverse topload forces during testing.

A known plastics container has a substantially rectangular footprint, with two corner regions on each side of a notional centre line aligned with the longitudinal axis, with all four corner regions equidistant thereform. An example of such a known footprint is shown at 300 in Figure 11. Such a container may be of blow moulded construction, e.g. formed by blow moulding a parison 310 in a mould with two parts 320, 330 which separate along a notional centre line 340 (e.g. along the central longitudinal axis of the footprint of the container in Figure 11) when ejecting the container from the mould.

Figure 12 shows a modified mould tool 400, wherein the split line 440 of the mould tool pieces 420, 430 is arranged generally 'corner to comer' of a footprint of non-rectangular diamond shape of the kind described above (i.e. effectively at 45 degrees to that shown in Figure 11). Providing that the corners 460 arranged at 90 degrees to the split line 400 are not excessively deep, it has been found that the stretching/thinning effect on the parison 410 is likely to be less extreme than with conventional mould tools of the kind shown in Figure 11, resulting in more even distribution of plastic within the wall thickness.

As can be seen, the central longitudinal axis of the footprint in Figure 12 is aligned with the split line 440 of the mould tool 400. Preferably, the handle eye of the container (not visible in Figure 12) is also aligned with the split line 440, as would be the case for the containers shown in Figures 6c and 9b.

The footprint defined by the mould tool 400 is generally diamond-shaped, being six-sided with two generally opposing longitudinal end surfaces 470 separated by four angled side surfaces 480. The footprint is non-rectangular and the internal angles of the footprint in the middle region are greater than the internal angles at the longitudinal ends of the footprint. Hence, the width of the footprint is greatest at the middle region and smallest at either longitudinal end.

## Claims

1. A plastics container for storing a liquid (e.g. milk), the container having a body which includes an integral handle defining a handle eye and which defines a chamber for storing liquid, the body having a footprint with a transverse axis extending in a first direction and a longitudinal axis extending in a second direction perpendicular to said first direction, wherein the footprint has two generally opposing longitudinal end surfaces and angled side surfaces arranged between said longitudinal end surfaces, and the footprint has a width which varies along its longitudinal axis, is greatest at a middle region of the footprint and smallest at either longitudinal end of the footprint, wherein the width of the footprint in the middle region is less than the length of the footprint between the longitudinal end surfaces, and wherein the integral handle has a longitudinal axis which extends in line with the longitudinal axis of the footprint of the body.

2. A container according to claim 1 wherein the middle region of the footprint defines opposing transverse ends of the footprint on either side of the longitudinal axis.

3. A container according to claim 1 or claim 2 wherein the footprint is generally six-sided.

4. A container according to any of claims 1 to 3 including a neck extending from the body, the neck having an open passageway therethrough for passage of liquid to/from the chamber; wherein the neck and body intersect in a closed loop which has a non-planar profile.

5. A container according to any of claims 1 to 4 including a neck extending from the body, the neck having an open passageway therethrough for passage of liquid to/from the chamber, wherein the passageway is concentric with a central vertical axis of the body.

6. A container according to any of claims 1 to 5 wherein the container is of blow moulded construction, having a part line which corresponds to the longitudinal axis of the footprint.

7. A method of producing a plastics container, the method comprising the step of providing a mould tool defining a cavity configured to produce a container having a body which includes an integral handle defining a handle eye and which defines a chamber for storing liquid, the body having a footprint with a transverse axis extending in a first direction and a longitudinal axis extending in a second direction perpendicular to said first direction, the footprint having two generally opposing longitudinal end surfaces and angled side surfaces arranged between said longitudinal end surfaces, wherein the footprint has a width which varies along its longitudinal axis and is greatest at a middle region of the footprint and smallest at either longitudinal end of the footprint, wherein the width of the footprint in the middle region is less than the length of the footprint between the longitudinal end surfaces, and wherein the integral handle has a longitudinal axis which extends in line with the longitudinal axis of the footprint of the body, the method further comprising the step of blow moulding plastics in said cavity.

8. A method according to claim 7 wherein the mould tool has a split line and the cavity is configured so that the longitudinal axis of the footprint is aligned with the split line of the mould tool.

9. A method of storing milk, comprising the steps of providing a shelf or trolley having a storage surface and arranging a plurality of containers in accordance with any of claims 1 to 6 in a close packed array on the storage surface.

10. A method for producing a lightweight plastics container, the method involving the step of blow moulding plastics in a mould tool having a cavity configured to produce a container according to any of claims 1 to 6, wherein the mould tool has a split line and the cavity is configured so that the longitudinal axis of the footprint is aligned with the split line of the mould tool.

11. A mould tool configured for producing a plastics container in accordance with any of claims 1 to 6, or configured for use in the method of any of claims 7 to 10.
